# EUROPÄISCHE PATENTSCHRIFT

(11) **EP 0 591 201 B1**
(45) Veröffentlichungstag und Bekanntmachung des Hinweises auf die Patenterteilung: **17.04.1996**
(21) Anmeldenummer: 91917579.4
(22) Anmeldetag: 07.10.1991
(51) Int. Cl.: F02M 51/04, F02M 59/36

(54) **KRAFTSTOFF-EINSPRITZVORRICHTUNG FÜR BRENNKRAFTMASCHINEN**
FUEL INJECTION DEVICE FOR INTERNAL COMBUSTION ENGINES
DISPOSITIF D'INJECTION DE CARBURANT POUR MOTEURS A COMBUSTION INTERNE

(30) Priorität: 26.02.1991 DE 4106015
(43) Veröffentlichungstag der Anmeldung: 13.04.1994
(60) Teilanmeldung: 95111191.3
(73) Patentinhaber: Ficht GmbH, D-85610 Kirchseeon (DE)
(72) Erfinder: HEIMBERG, Wolfgang, D-8017 Ebersberg (DE)
(74) Vertreter: Patentanwälte Dr. Solf & Zapf
(86) Internationale Anmeldenummer: EP9101902
(87) Internationale Veröffentlichungsnummer: WO9214925

(56) Entgegenhaltungen:
- EP-A- 0 174 261
- EP-A- 0 324 452
- DD-A- 105 653
- DD-A- 120 514
- DD-A- 213 472
- DE-A- 2 751 457
- DE-C- 598 918
- US-A- 1 664 607
- US-A- 2 666 153

## Beschreibung

Die Erfindung betrifft eine Vorrichtung zum Einspritzen von Kraftstoff für Brennkraftmaschinen der im Oberbegriff des Anspruchs 1, angegebenen Art.

Kraftstoff-Einspritzvorrichtungen für Brennkraftmaschinen sind weit verbreitet und haben sich in der Praxis in unterschiedlichen Bauformen durchgesetzt, denen jedoch verschiedene Mängel anhaften.

Für die Direkteinspritzung von Dieselkraftstoff oder auch die Einspritzung im sog. Vorkammerverfahren sind Pumpen gebräuchlich, die nockenbetätigte Plunger bzw. Kolben aufweisen, wobei die Nocken auf einer von der Motorkurbelwelle direkt angetriebenen Nockenwelle angeordnet sind. Die Mengenverstellung wird über in den Kolben bzw. Plungern eingearbeitete Steuerkanten bewerkstelligt. Pumpen dieser Bauart haben einen hohen Betriebsleistungsbedarf über den gesamten Kurbelweg der Brennkraftmaschine bzw. des Dieselmotors hinweg und sind insbesondere einer elektronischen Steuerung nicht zugänglich.

Demgegenüber ist eine Einspritzvorrichtung der eingangs genannten Art einer elektronischen Steuerung grundsätzlich zugänglich. Der Aufbau einer derartigen bekannten Einspritzvorrichtung soll nachfolgend anhand der Fig. 1 im Zusammenhang mit den Fig. 2 und 3 näher beschrieben werden, die typische Druckverläufe der Druckstoßeinrichtung zeigt, über die der Einspritzdüse Kraftstoff zugeführt wird.

Aus einem Kraftstoffbehälter 1 wird mittels einer Kraftstoffpumpe 2 mit einem Druck von etwa 3 bis 10 bar Kraftstoff in eine Rohrleitung 5 eingespeist, in welcher ein Druckregler 3 und eine Dämpfungseinrichtung 4 angeordnet sind. Am Ende der Leitung 5 ist ein beispielsweise elektromagnetisch betätigtes Absperrventil 6 vorgesehen, über welches im geöffneten Zustand von der Pumpe 2 beschleunigter Kraftstoff in den Vorratsbehälter 1 zurückgeführt wird. Durch schlagartiges Schließen des Sperrventils 6 wird die kinetische Energie des in der Leitung 5 sowie in der Leitung 7 strömenden Kraftstoffes in Druckenergie umgewandelt. Die Größe des dabei entstehenden Druckstoßes beträgt etwa 20 bis 80 bar, also etwa das 10fache des durch die Pumpe 2 erzeugten Strömungsdruckes in der Leitung 5, die auch Schwungleitung genannt wird. Der so am Absperrventil 6 entstehende Druckstoß wird zum Abspritzen des auf diese Weise beschleunigten Kraftstoffes über eine Einspritzdüse 10 genutzt, die über eine Druckleitung 9 an das Ventil 6 und damit an die Leitung 5 angeschlossen ist.

Durch die Verwendung eines elektromagnetisch betätigbaren Absperrventils ist diese bekannte Einspritzvorrichtung elektronisch steuerbar, und zwar mittels einer an das Ventil 6 angeschlossenen elektronischen Steuereinheit 8.

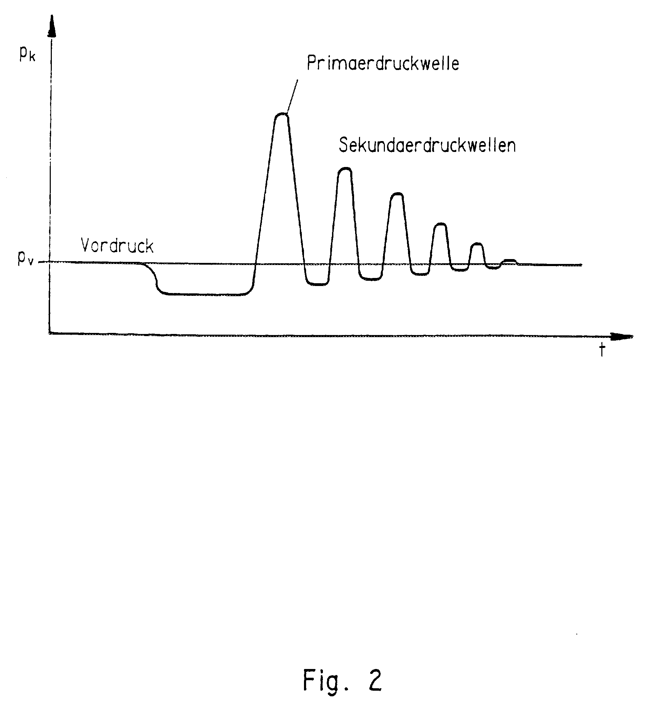

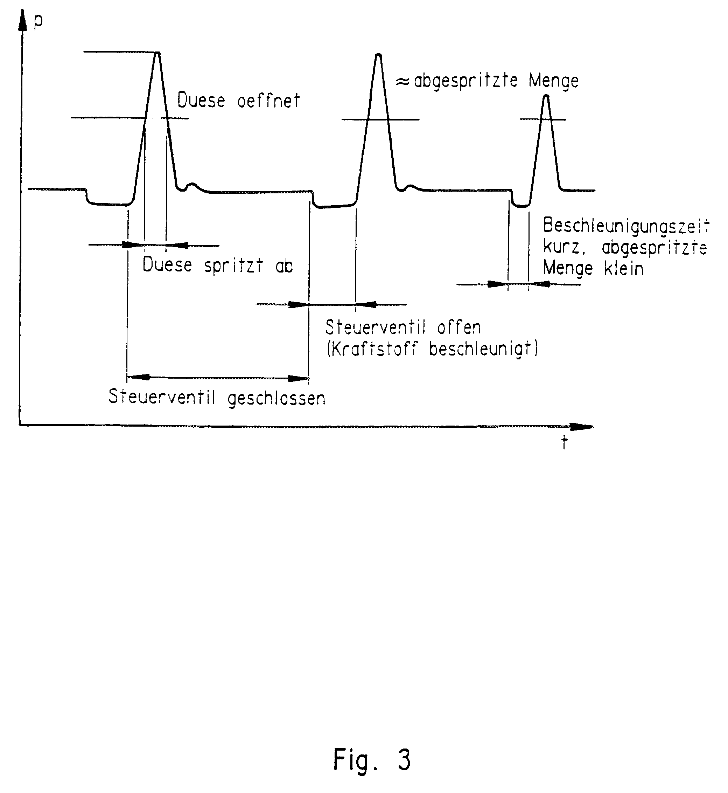

Der beim schlagartigen Schließen des Absperrventils 6 in der Schwungleitung 5 erzeugte Druckstoß wandert in Form einer Druckwelle mit Schallgeschwindigkeit durch die Leitungen 5, 7 und 9, wobei die Energie der Druckwelle in den Leitungen 5 und 9 zum Abspritzen von Kraftstoff über die Düse 10 zur Verfügung steht. Die sich in der Schwungleitung 5 ausbreitende Druckwelle wird am Ausgang der Pumpe 2 reflektiert und wandert zum Absperrventil 6 zurück. Die Zeitdauer der Phase dieses direkten Druckstoßes entspricht der Laufdauer der Druckwelle durch die Schwungleitung 5 und bewirkt die Druckdauer an der Einspritzdüse 10. Nach der Phase dieses direkten Druckstoßes verbleibt in der Schwungleitung 5 eine Restdruckenergie, die in der Schwungleitung hin- und herläuft. Fig. 2 zeigt einen typischen zeitlichen Verlauf des Druckstoßes in der Schwungleitung bei Abwesenheit der Dämpfungseinrichtung 4 in der Leitung 5. Dieser Druckverlauf ist durch eine Primärdruckwelle maximaler Energie und nachfolgende Sekundärdruckwellen mit zunehmend abnehmender Energie gekennzeichnet. Sämtliche dieser Druckwellen können grundsätzlich ein Einspritzen bewirken. Die Folge dieser Druckwellen beschränkt jedoch die erreichbare Arbeitsfrequenz des Systems, weshalb zugunsten definierter Arbeitsbedingungen die Sekundärdrucklwellen unterdrückt werden. Hierzu dient die in der Schwungleitung 5 angeordnete Dämpfungseinrichtung 4, die sämtliche Sekundärdruckwellen unterdrückt. Ein entsprechender Druckverlauf ist in Fig. 3 gezeigt, wobei deutlich wird, daß zwischen aufeinanderfolgenden Primärdruckwellen die Sekundärdruckwellen bis auf eine geringe Restwelligkeit unterdrückt werden.

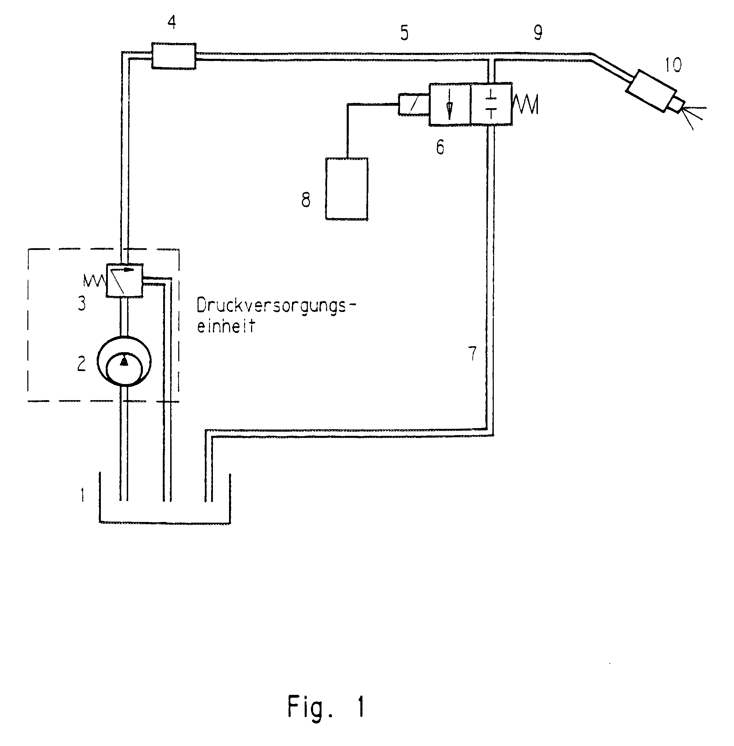

Im Vergleich zu der eingangs beschriebenen, einer elektronischen Regelung nicht zugänglichen Kraftstoff-Einspritzvorrichtung zeichnet sich die anhand der Fig. 1 bis 3 beschriebene herkömmliche Einspritzvorrichtung der gattungsgemäßen Art durch eine elektronische Steuerbarkeit aus, wobei insbesondere die Charakteristik des Einspritzdrucks grundsätzlich unabhängig von der Drehzahl des Verbrennungsmotors ist. Aufgrund des steilen Druckanstiegs und Druckabfalls in der Druckstoßeinrichtung ist ein schnelles Öffnen und Schließen der Einspritzdüse und damit ein guter Kraftstoffzerstäubungsverlauf erreichbar.

Nachteilig an der vorstehend beschriebenen bisherigen Kraftstoff-Einspritzvorrichtung ist es, daß eine Vordruckversorgung erforderlich ist, welche die für die Beschleunigung der Kraftstoff-Flüssigkeitssäule in der Schwungleitung notwendige Energie bereitstellt, und welche kontinuierlich arbeitet.

Diese kontinuierlich arbeitende Vordruckversorgung macht einen entsprechenden Aufwand für die Druckkonstanthaltung notwendig. Zu diesem Zweck wird die von der Pumpe 2 zuviel geförderte Kraftstoffmenge über das Druckregelventil 3 abgesteuert, das über eine Rücklaufleitung mit dem Vorratsbehälter 1 in Verbindung steht. Diese Druckabsteuerung führt zu einem Energieverlust, und damit neben einer Erhöhung der Kraftstofftemperatur zu Druckänderungen am Einspritzventil 6, wodurch die Genauigkeit der Einspritzung beeinträchtigt wird. Darüber hinaus benötigt das Druckregelventil 3 stets eine Mindest-Abregelmenge, um stabil arbeiten zu können, wodurch ein weiterer Energieverlust auftritt. Da der Mengenstrombedarf an der Einspritzdüse 10 von der Motordrehzahl abhängt sowie von der jeweils abzuspritzenden Menge, muß die Druckversorgungseinheit bereits im Leerlauf den Mengenstrom für den Vollastbetrieb fördern, wodurch relativ große Kraftstoffmengen bei entsprechendem Energieverlust für das Gesamtsystem über das Druckregelventil 3 abgesteuert werden müssen.

Darüber hinaus eignet sich die vorstehend beschriebene Einspritzvorrichtung mit einer kontinuierlich arbeitenden Pumpe zwar für eine Einspritzung in sog. Saugrohreinspritzmotore, nicht jedoch für eine direkte Einspritzung in den Brennraum von Ottomotoren, da hierfür ein wesentlich höheres Druckniveau erforderlich ist, wodurch die für die Pumpe ständige benötigte Leistung nicht mehr akzeptable Größen erreicht und die Pumpe darüber hinaus wegen der hohen zu verarbeitenden Drücke, Ausmaße und Gewichte erfordern würde, die insbesondere bei Fahrzeugmotoren nicht tragbar sind.

Es ist daher in der Vergangenheit der Versuch unternommen worden, diskontinuierlich arbeitende Einspritzvorrichtungen zu konstruieren, also Einspritzvorrichtungen, bei denen der für die Einspritzung benötigte Druck nicht permanent bereitgestellt werden muß, sondern erst unmittelbar vor oder zu dem Zeitpunkt erzeugt wird, zu dem er für den Einspritzvorgang benötigt wird. Eine entsprechende Vorrichtung ist beispielsweise aus der DE-PS 598 918 bekannt. Diese bekannte Vorrichtung basiert auf einem schweren Elektromagneten, der bei Erregung einen mit dem Anker verbundenen Kolben in einen Verdrängungsraum drückt, wodurch der Kraftstoff über eine Düse in den Brennraum der Brennkraftmaschine eingespritzt wird. Unmittelbar vor dem Einspritzvorgang wird ein Absperrventil geschlossen, das dann den Verdrängungsraum gegenüber einem Brennstoffeinlaß abdichtet. Dieser bekannten Vorrichtung haftet der gravierende Nachteil an, daß das zur Direkteinspritzung notwendige hohe Druckniveau die Verwendung eines sehr großen Elektromagneten benötigt, wodurch die gesamte Vorrichtung platzaufwendig und sehr träge wird, so daß sie sich für Fahrzeugmotoren weniger eignet.

In der Folge ist diese bekannte Einspritzvorrichtung deshalb mit dem Ziel kleiner Bauformen weiter entwickelt worden. Entsprechende Einspritzvorrichtungen sind aus der DD-PS 120 514 und der DD-PS 213 472 bekannt. Diese Vorrichtungen arbeiten nach dem System der Speicherung von kinetischer Energie. Zu diesem Zweck ist es vorgesehen, den Anker des Elektromagneten und damit die Kraftstoff-Flüssigkeitssäule über eine längere Strecke zu beschleunigen, bevor der Druck aufgebaut wird, der zum Abspritzen des Kraftstoffes über die Düse erforderlich ist. Diese bekannten Vorrichtungen werden auch als Pumpen-Düsenelemente bezeichnet, die nach dem Festkörper-Energiespeicherprinzip arbeiten.

Gemäß der DD-PS 120 514 ist der vom Förderkolben durchsetzte Kraftstoff förderraum in einem ersten Abschnitt mit axial angeordneten Nuten versehen, durch welche der Kraftstoff abzufließen vermag, ohne daß es zu einem wesentlichen Druckaufbau kommt, der im darauf folgenden zweiten Abschnitt des Förderraums zustandekommt, der keine Fluid-Abflußnuten aufweist. Der Förderkolben wird daher durch den inkompressiblen Kraftstoff abgebremst, wodurch im Kraftstoff ein Druck aufgebaut wird, durch den der Widerstand des Einspritzventils überwunden wird, so daß es zum Abspritzen von Kraftstoff kommt. Nachteilig hierbei ist es, daß beim Eintauchen des Förderkolbens in den geschlossenen Abschnitt des Förderzylinders aufgrund ungünstiger Spaltbedingungen, nämlich einer großen Spaltbreite und einer kleinen Spaltlänge, große Druckverluste auftreten, die den notwendigen Druckaufbau für das Abspritzen ungünstig beeinflussen. Gemäß der DE-PS 213 472 ist es deshalb vorgeschlagen worden, im Förderzylinder einen Schlagkörper anzuordnen, so daß der Druckverlust trotz relativ großer Spaltbreiten vertretbar klein gehalten wird. Nachteilig ist hierbei jedoch, daß es durch den Schlagvorgang zu einem Verschleiß der aufeinandertreffenden Körper kommt. Weiterhin wird der Schlagkörper durch den Schlag zu Longitudinalschwingungen angeregt, die sich auf den Kraftstoff übertragen und dort als hochfrequente Druckschwingungen den Einspritzvorgang ungünstig beeinflussen.

Ein gravierender Nachteil der beiden vorstehend geschilderten Festkörper-Energiespeicher-Einspritzvorrichtungen besteht darin, daß der Einspritzverlauf des Kraftstoffes nur in begrenztem Maße steuerbar ist, sich also nur im beschränkten Umfange an die motorischen Erfordernisse anpassen läßt.

Aus der EP-A-O 174 261 ist eine Vorrichtung zum Einspritzen von Kraftstoff für Brennkraftmaschinen mit einer Einspritzdüse bekannt, bei der Kraftstoff durch eine Druckstoßeinrichtung zugeführt wird, die eine kraftstoffbeschleunigende Pumpe und eine den Kraftstoff verzögernde Einrichtung aufweist, durch deren Betätigung die kinetische Energie des beschleunigten Kraftstoffes schlagartig in eine den Kraftstoff über die Einspritzdüse abspritzende Stoßwelle umgewandelt wird, wobei die Pumpe eine intermittierende Kolbenpumpe ist. Die Rückführung des Kraftstoffs in den Vorratsbehälter erfolgt in einem offenen Kraftstoffkreislaufsystem. Die bekannte Vorrichtung ist nicht frei steuerbar. Der offene Kreislauf erfordert einen zu hohen Energieaufwand.

Die Aufgabe der Erfindung besteht darin, eine Vorrichtung zum Einspritzen von Kraftstoff für Brennkraftrmaschinen der eingangs genannten Art zu schaffen, mit der mit geringer optimal ausgenutzter Energie sehr schnell, sowie entkoppelt von motorischen Vorgängen präzise steuerbar Kraftstoff eingespritzt werden kann.

Gelöst wird diese Aufgabe durch die kennzeichnenden Merkamale des Anspruchs 1. Vorteilhafte Weiterbildungen der Erfindung sind in den Unteransprüchen angegeben.

Erfindungsgemäß ist es demnach vorgesehen, den für die Einspritzung erforderlichen Kraftstoff-Volumenstrom für jeden Einspritzvorgang nur so lange bereitzustellen, wie dies in Abhängigkeit von den Motorbetriebsbedingungen zeit- und mengenbedarfsgerecht erforderlich ist. Durch die Verwendung einer intermittierend betriebenen Kraftstoffbeschleunigungspumpe entfällt die kontinuierliche Vordruckversorgung gemäß dem Stand der Technik, was der Energiebilanz der Einspritzvorrichtung zugute kommt. Optimiert wird die Ausnutzung der Energie erfindungsgemäß ferner durch die Verwendung einer gemeinsamen Steuereinrichtung für die Beschleunigungspumpe und die elektrisch betätigbare Verzögerungseinrichtung, beispielsweise in Gestalt eines elektromagnetisch betätigbaren Absperrventils.

Bevorzugt wird als intermittierend arbeitende Kraftstoffbeschleunigungspumpe eine elektromagnetisch betätigte Kolbenpumpe eingesetzt. Alternativ hierzu eignet sich auch eine Membranpumpe zur Kraftstoffbeschleunigung innerhalb der Druckstoßeinrichtung. Anstelle eines elektromagnetischen Pumpenantriebs kann auch ein elektrodynamischer, ein mechanischer oder ein Antrieb mittels Piezoelementen vorgesehen sein.

Durch die gemeinsame Ansteuerung von Pumpe und Verzögerungseinrichtung können nicht nur die Pumpen- und Verzögerungseinrichtungssteuerzeiten optimal aneinander angepaßt werden. Vielmehr erlaubt diese gemeinsame Steuerung auch eine von motorischen Vorgängen vollständig entkoppelte Steuerung des Einspritzvorgangs in Abhängigkeit vom jeweiligen Kraftstoffbedarf.

Ausgehend von der anhand der Fig. 1 bis 3 vorstehenden beschriebenen Einspritzvorrichtung, bei der die Verzögerungseinrichtung ein Absperrventil ist, ist die Erfindung vorteilhafterweise dadurch realisiert, daß ein geschlossens Einspritzsystem vorgesehen ist, bei dem das Absperrventil mit dem Saugraum hinter dem Förderkolben der Kolbenpumpe verbunden ist. Auch die Kolbenpumpe des geschlossenen Einspritzsystems umfaßt vorzugsweise einen elektromagetischen oder Solenoidantrieb, so daß die Kolbenpumpe zusammen mit dem elektromagentisch ausgeführten Absperrventil durch eine gemeinsame elektronische Steuereinrichtung optimal betreibbar ist.

Eine baulich sowie bezüglich ihrer Ansteuerung besonders einfach aufgebaute Kolbenpumpe für das geschlossene Einspritzsystem sieht es vor, daß der Förderkolben mit dem Anker des Elektromagneten gemeinsam ausgebildet ist. Kolbenstirnseiten identischer Größe erlauben hierbei eine verlustfreie Beschleunigung des Kolbens.

Ein wesentlicher Vorteil des geschlossenen Einspritzsystems besteht darin, daß aus dem Kraftstoffvorratsbehälter jeweils nur diejenige Kraftstoffmenge zur Beschleunigungspumpe gefördert werden muß, die im vorausgehenden Einspritzzyklus abgespritzt worden ist. Im Vergleich zu dem offenen Einspritzsystem ist von der Beschleunigungspumpe deshalb im geschlossenen Einspritzsystem für die Kraftstofförderung aus dem Vorratsbehälter weniger Energie aufzubringen, was der Energiebilanz des Gesamtsystems zugute kommt. Ferner nützt das geschlossene Einspritzsystem den beim schlagartigen Schließen des Absperrventils erzeugten Druckstoß im Vergleich zum offenen Einspritzsystem wesentlich besser aus. Während nämlich beim offenen Einspritzsystem, wie beispielsweise aus Fig. 1 hervorgeht, ein Teil des Druckstoßes über die Rücklaufleitung in den Kraftstoffvorratsbehälter nutzlos abgeleitet wird, wird dieser Teil des Druckstoßes beim geschlossenen Einspritzsystem gemäß der Erfindung an die Rückseite des Pumpenkolbens angelegt und damit auf den abgespritzten Kraftstoff übertragen. Auch diese Maßnahme kommt der Gesamtenergiebilanz des Einspritzsystems zugute, weshalb gegebenenfalls eine entsprechend kleinere Bauform für die Kraftstoffbeschleunigungspumpe gewählt werden kann.

Die ferner erfindungsgemäß vorgesehene Anordnung von Kolbenpumpe und Absperrventil in einem gemeinsamen Gehäuse erlaubt eine weitere drastische Reduzierung der Baugröße, sowie einen vereinfachten Aufbau der Einsgritzvorrichtung, insbesondere dann, wenn das Absperrventil ebenfalls als Solenoid aufgebaut ist. Alternativ hierzu kann ein Absperrventil mit einem nach dem Bernoulli-Effekt gesteuerten Ventilorgan vorgesehen sein, das rein mechanisch aufgebaut ist und deshalb keiner externen Energiezuführung bedarf.

Ferner schafft die Erfindung eine Kraftstaff-Einspritzvorrichtung nach dem Festkörper-Energiespeicherprinzip. Im Gegensatz zu dem diesbezüglichen eingangs geschilderten Stand der Technik, demnach in einem ersten Hubabschnitt einer Kolbenpumpe ein Rückströmen des Kraftstoffes stattfindet, gefolgt von einem Druckaufbau im darauffolgenden Hubabschnitt, ist es erfindungsgemäß vorgesehen, die Energie der Kolbenpumpe entlang des gesamten Förderhubes in einem geschlossenen Förderraum zu speichern, und die für ein Abspritzen über die Einspritzdüse benötigte Druckenergie dadurch aufzubauen, daß der Ablauf des verdrängten Kraftstoffes mittels eines Absperrventils schlagartig beendet wird. Vorteilhafterweise ist dabei das Absperrventil mit einem elektromagnetischen Antrieb realisiert, so daß sowohl das Ventil wie auch die Pumpe durch einen gemeinsamen elektronischen Steuerkreis in der benötigten Weise steuerbar sind. Ein wesentlicher Vorteil des erfindungsgemäß realisierten Festkörperenergiespeicherprinzips ist, daß der Energiespeichervorgang, also die Beschleunigung des Kolbens durch die Zeitdauer des Kolbenvorhubs ohne eine wesentliche Druckerhöhung steuerbar ist. Durch die Möglichkeit eines variablen Kolbenvorhubes sowie dadurch, daß nach dem Schließen des Absperrventils im Kraftstoffzulauf zur Pumpe der Antriebsmagnet für die Pumpe verschieden lang eingeschaltet sein und in dieser Zeit mit verschieden hoher Intensität erregt werden kann, lassen sich die Einspritzlänge und der -verlauf in der benötigten, vom jeweiligen Motorzustand abhängigen Weise beeinflussen. Durch beliebige Kombinationen des Vorförderhubs und der nachfolgenden Verdrängungsphase durch den erregten Absperrventilmagneten lassen sich sämtliche im Einzelfall benötigten Druckverläufe darstellen.

Nachfolgend wird die Erfindung anhand der Zeichnung näher erläutert; in dieser zeigen:
- Fig. 1: eine schematische Darstellung einer herkömmlichen Kraftstoff-Einspritzvorrichtung,
- Fig. 2 und 3: charakteristische Druckverläufe beim Abspritzen von Kraftstoff mit der Vorrichtung von Fig. 1,

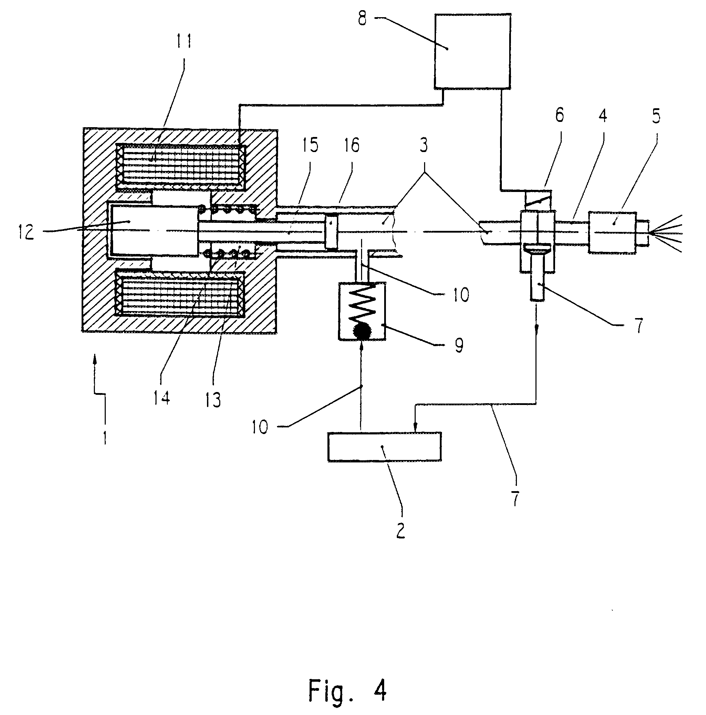

- Fig. 4: eine Ausführungsform einer Kraftstoff-Einspritzvorrichtung in schematischer Darstellung mit Rückführung des Kraftstoffs in den Vorratsbehälter in einem offenen Kraftstoffkreislauf,

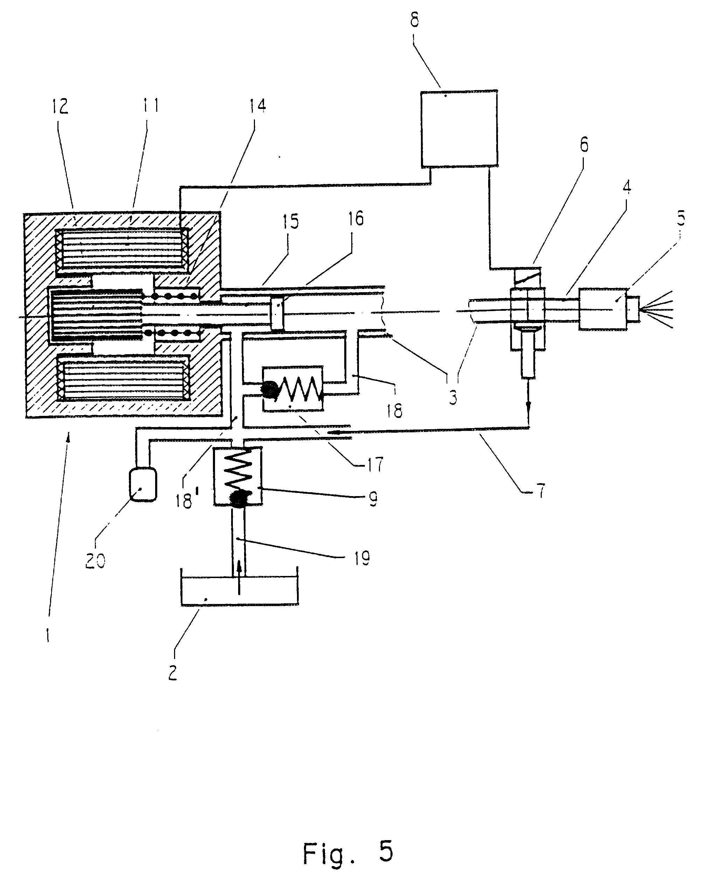

- Fig. 5: eine zweite Ausführungsform der erfindungsgemäßen Kraftstoff-Einspritzvorrichtung in schematischer Darstellung mit einem geschlossenen Kraftstoffkreislauf,

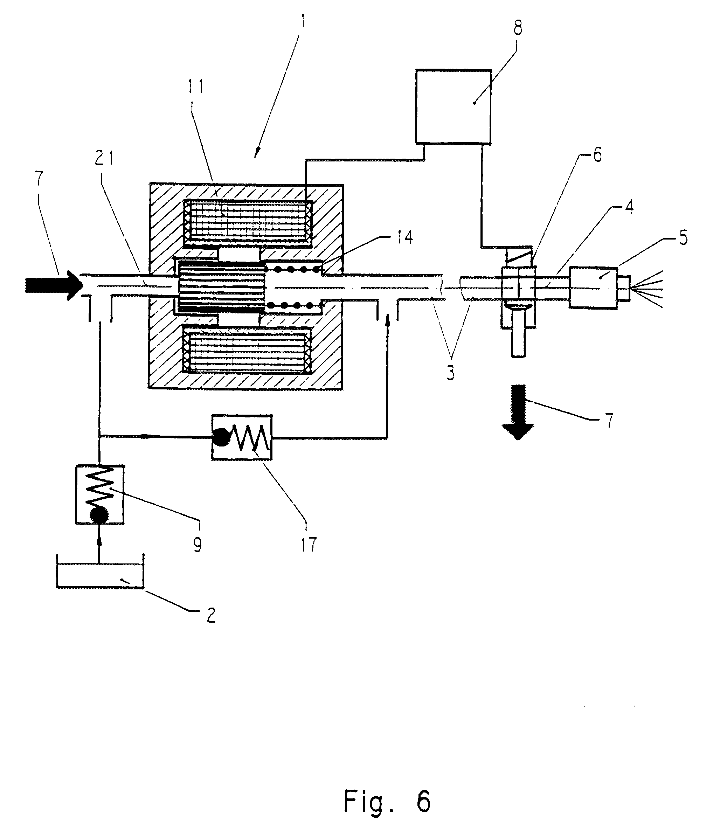

- Fig. 6: eine Variante der Vorrichtung von Fig. 5,

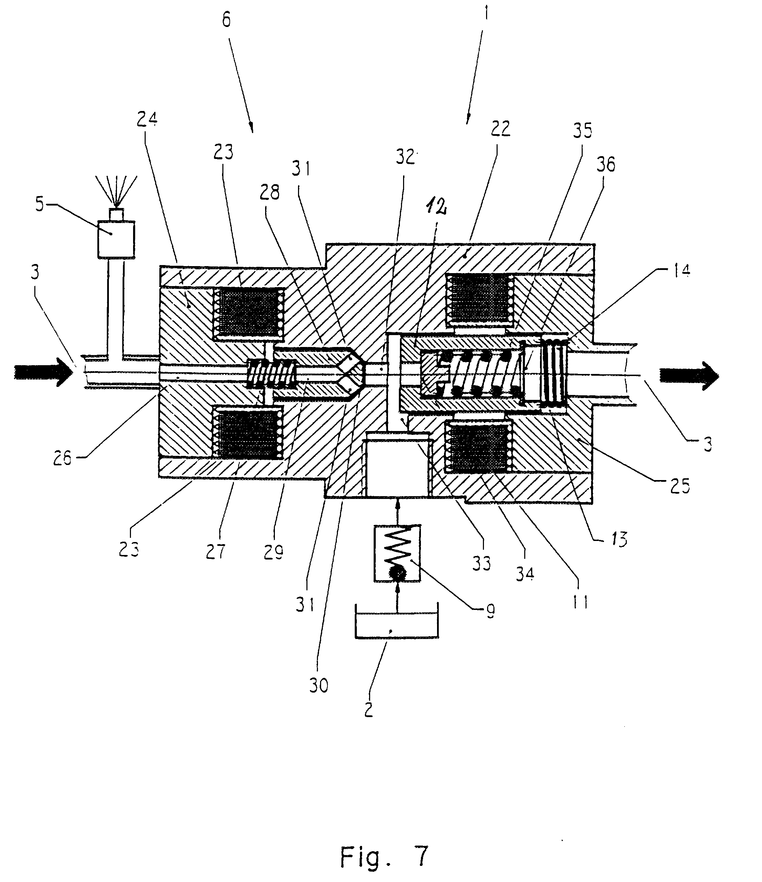

- Fig. 7: eine Variante der Vorrichtung von Fig. 6 mit baueinheitliche- Ausführung wesentlicher Bauteile der Vorrichtung,

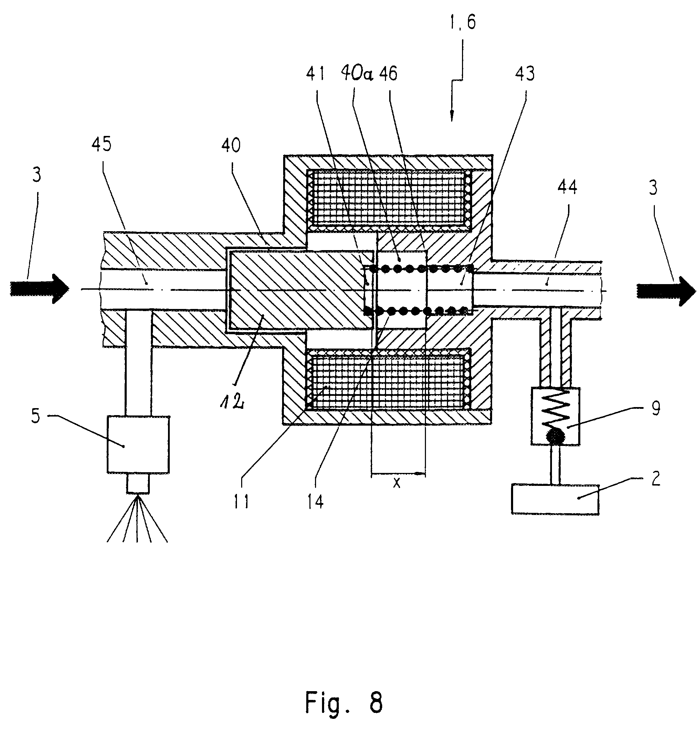

- Fig. 8: eine Ausführungsform der erfindungsgemäßen Kraftstoff-Einspritzvorrichtung mit materialeinheitlich realisiertem Förderkolben und Absperrventil,

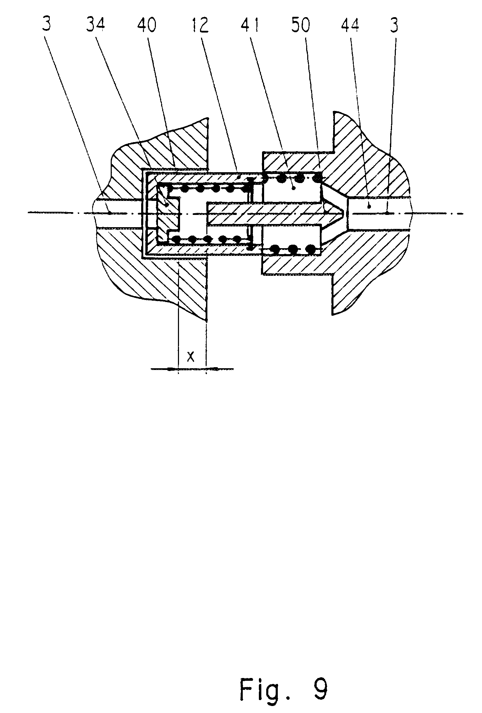

- Fig. 9 bis 11: Varianten der materialeinheitlichen Ausbildung von Förderkolben und Absperrventil der Vorrichtung von Fig. 8.

Die Fig. 1 bis 3 sind eingangs zum Stand der Technik beschrieben worden.

Ausführungsformen der erfindungsgemäßen Kraftstoff-Einspritzvorrichtung sind in den Fig. 4 bis 6 dargestellt, wobei für gleiche Bauteile die selben Bezugszeichen verwendet sind.

Die in Fig. 4 gezeigte Ausführungsform einer Kraftstoff-Einspritzvorrichtung basiert auf einer Kolbenpumpe 1 mit elektromagnetischem Antrieb zum Ansaugen von Kraftstoff aus einem Vorratsbehälter 2 sowie zum Beschleunigen des angesaugten Kraftstoffes in einer Schwungleitung 3, die über eine Druckleitung 4 an eine Einspritzdüse 5 angeschlossen ist. Ferner ist in einem Abzweig zwischen der Schwungleitung 3 und der Druckleitung 4 ein Absperrventil 6 angeordnet, das als elektrcmagnetisches Ventil ausgeführt ist und den Kraftstoff-Durchgang zu einer Rücklaufleitung 7 steuert, die an das Absperrventil 6 angeschlossen ist und in den Vorratsbehälter 2 mündet. Die Ansteuerung des Absperrventils 6 sowie der Kolbenpumpe 1 erfolgt über eine gemeinsame elektronische Steuereinrichtung 8, die an die Erregerspule des Magnetventils 6 sowie an eine Spule des Antriebselektromagneten der Kolbenpumpe 1 angeschlossen ist. Ferner ist ein Rückschlagventil 9 in einer Ansaugleitung 10 angeordnet, die das pumpenseitige Ende der Schwungleitung 3 mit dem Vorratsbehälter 2 verbindet.

Die Kolbenpumpe 1 umfaßt eine Magnetspule 11 mit einem im Spulendurchgang angeordneten Anker 12, der als zylindrischer Körper, beispielsweise als Vollkörper, ausgebildet ist, in einer Gehäuse-Bohrung 13 geführt ist, die sich parallel zur Zentrallängsachse der Ringspule 11 erstreckt, und mittels einer Druckfeder 14 in einer Ruhestellung vorgespannt ist, in welcher er in der Fig. 4 am linken Ende der Gehäuse-Bohrung 13 mit seiner hinteren Stirnwand anliegt. Die andere Stirnwand des Ankers 12 wird von der Feder 14 beaufschlagt, die sich am rechten Ende der Bohrung 13 an der Gehäusewandung der Pumpe 1 abstützt. Die federbeaufschlagte Stirnseite des Ankers 12 ist fest mit einer Kolbenstange 15 verbunden, an derem freiem Ende ein Kolben 16, der Förderkolben der Pumpe 1, befestigt ist, der an der Innenwandung der Schwungleitung 3 geführt ist und bevorzugt gegenüber dieser Wandung abgedichtet ist. Die Kolbenstange 15 durchsetzt eine Bohrung im Pumpengehäuse, deren Durchmesser geringer ist als der Durchmesser der den Anker 12 führenden Bohrung.

Die Ansaugleitung 10 mündet vor der außen gelegenen Stirnfläche des Förderkolbens 16 in die Schwungleitung 3. Das Rückschlagventil 9 in der Förderleitung 10 umfaßt beispielsweise als Ventilelement eine federvogespannte Kugel, wobei Kugel und Feder so angeordnet sind, daß das kugelförmige Ventilelement im Rückschlagventil angehoben wird, wenn der Förderkolben 16 zum Ansaugen von Kraftstoff aus dem Behälter 2 seinen Saughub durchführt, also dann, wenn der Kolben 16 in Fig. 4 eine Hubbewegung nach links ausführt, was dann der Fall ist, wenn der Magnet 11 entregt ist und der Anker 12 in seine Ruhestellung durch die Feder 14 überführt wird. Im anderen Falle, nämlich beim Förderhub des Kolbens 16, entsprechend einer Kolbenbewegung in Fig. 4 nach rechts bei erregtem Elektromagneten 11, wird das Ventilelement des Rückschlagventils 10 in seine Sperrstellung überführt, so daß die Verbindung der Schwungleitung 3 zum Vorratsbehälter 2 unterbrochen ist. Durch den Förderhub des Kolbens 16 wird die Masse des in der Schwungleitung 3 befindlichen Kraftstoffes beschleunigt und während einer durch die Steuereinrichtung 8 vorgegebenen Öffnungszeitdauer des Absperrventils 6 in die Rücklaufleitung 7 und über diese in den Behälter 2 überführt. Während dieses Zeitraums erfolgt also in erster Linie eine Beschleunigung des Kraftstoffes in den Leitung 3 und 7, und der Kraftstoffdruck ist dabei so gering, daß die in an sich bekannter Weise beispielsweise hydraulisch blockierte Düse 5 einen Sperrzustand einnimmt, in welcher über die Düse kein Kraftstoff auszutreten vermag.

Wenn die Kraftstoffmenge in der Schwungleitung 3 (und der Rücklaufleitung 7) einen durch die Steuereinrichtung 8 in Abhängigkeit von aktuellen Motorbetriebsbedingungen vorgegebenen Beschleunigungswert erreicht hat, wird ebenfalls unter Steuerung der Einrichtung 8 das Absperrventil geschlossen, wodurch die kinetische Energie des in den Leitungen 3 und 4 strömenden Kraftstoffes schlagartig in eine Druckstaßenergie umgewandelt wird, deren Wert so hoch ist, daß der Schließwiederstand der Düse 5 überwunden und Kraftstoff über die Düse 5 abgespritzt wird.

Während die Einspritzvorrichtung gemäß Fig. 4 insofern ein offenes System darstellt, als beim Beschleunigungshub des Förderkolbens 16 über die Leitung 7 in den Behälter 2 eine größere Kraftstoffmenge in den Vorratsbehälter 2 zurückgeleitet und beim Saughub des Kolbens 16 aus dem Behälter 2 wiederum angesaugt wird, ist in Fig. 5 eine erfindungsgemäße Einspritzvorrichtung gezeigt, in welcher der Kraftstoff im Kreislauf zur Pumpe 1 zurückgeführt ist, wobei aus dem Vorratsbehälter 2 beim Saughub des Förderkolbens 16 lediglich die Menge angesaugt wird, die beim vorausgehenden Einspritzvorgang über die Düse 5 abgespritzt worden ist. Ein derartiger geschlossener Kreislauf erfordert weniger Antriebsenergie durch die Pumpe 1 im Vergleich zu einem offenen System, weil eine geringere Kraftstoffmasse bewegt werden muß, wobei ein weiterer entscheidender Vorteil darin besteht, daß die Energie des Druckstoßes für den Abspritzvorgang mit herangezogen wird, die beim schlagartigen Schließen des Absperrventils in die nachgeschaltete Rücklaufleitung eingeleitet wird.

Die Einspritzvorrichtung gemäß Fig. 5 unterscheidet sich von derjenigen gemäß Fig. 4 durch eine Führung der Leitung 7 von dem Absperrventil 6 zur Rückseite des Förderkolbens 16 (Saugseite) sowie dadurch, daß zusätzlich zu dem Rückschlagventil 9 ein Rückschlagventil 17 vorgesehen ist, das in Reihe zu dem Rückschlagventil 9 geschaltet ist und die Kolbenvorderseite (Förderseite) mit der Kolbenrückseite (Saugseite) verbindet. Das Rückschlagventil 17 ist so ausgelegt, daß es seine Schließstellung beim Förderhub des Förderkolbens 16 einnimmt, so daß ein Fluidausgleich zwischen der Kolbenvorder- und -rückseite erfolgt.

Die Saugleitung 10 von Fig. 4 ist in Fig. 5 durch einen das zweite Rückschlagventil 17 mit der Schwungleitung 3 verbindenden Leitungsabschnitt 18 ersetzt, wobei das andere Ende des Rückschlagventils 17 über einen Leitungsabschnitt 18' mit der Leitung 7 verbunden ist, von der ein Leitungsabschnitt 19 abzweigt, der in den Behälter 2 mündet und in dem das erste Rückschlagventil 9 angeordnet ist, das in seiner Funktion dem Rückschlagventil 9 von Fig. 4 entspricht.

Beim Beschleunigungs- oder Förderhub des Förderkolbens 16 strömt in der Schwungleitung 3 beschleunigter Kraftstoff bei geöffnetem Absperrventil 6 über die Leitung 7 in den Saugraum hinter den Kolben 16. Durch das in der Leitung 7 strömende Fluid wird das Rückschlagventil 9 in seiner geschlossenen Stellung gehalten, und das zweite Rückschlagventil 17 ist beidseits, also über die Leitung 7 und über die Leitung 3 mit dem selben Druck beaufschlagt, so daß das Federelement dieses Ventils sein Ventilorgan in seiner geschlossenen Stellung hält. Die beiden Rückschlagventile 9 und 17 verbleiben auch dann in ihrer geschlossenen Stellung, wenn das Absperrventil 6 schlagartig geschlossen wird. Im Gegensatz zur Ausführungsform gemäß Fig. 4 verläuft eine Druckwelle beim Schließen des Ventils 6 nicht nur zwischen diesem und der Vorderseite des Förderkolbens, sondern auch zwischen dem Ventil 6 über die Leitung 7 und der Rückseite des Förderkolbens 16, wobei sich dieser Druckanteil zu dem Druckanteil in der Schwungleitung vor dem Kolben addiert, so daß das gesamte durch das Schließen des Ventils 6 in die Kraftstoffmenge induzierte Druckpotential zum Ausstoßen des Kraftstoffes über die Düse 5 zur Verfügung steht. Die dadurch gewonnene Energie in dem Einspritzsystem erlaubt entweder eine Miniaturisierung der Pumpe 1 oder alternativ hierzu eine verringerte Stromeinspeisung in den Antriebsmagneten der Pumpe 1.

Die Wirkflächen des Kolbens 16, nämlich die vordere und hintere Stirnseite dieses Kolbens sind aufgrund der Anbringung der Kolbenstange auf der rückseitigen Stirnfläche unterschiedlich groß, weshalb beiderseits des Kolbens 16 unterschiedliche Drücke herrschen. Diese Druckdifferenz wird durch einen Druckspeicher 20 ausgeglichen, der an die Leitung 18' angeschlossen ist.

Beim Saughub des Kolbens 16 strömt von der Kolbenrückseite unter Überwindung des Rückschlagventils 17 Kraftstoff über die Leitungsabschnitte 18 und 18' in die Schwungleitung 3 und über den Vorratsbehälter 2 wird lediglich unter Überwindung der beiden Rückschlagventile 9 und 17 eine geringe Menge an Kraftstoff angesaugt, entsprechend der über die Düse 5 abgespritzten Kraftstoffmenge.

Eine Variante der Kraftstoff-Einspritzvorrichtung von Fig. 5 ist in Fig. 6 gezeigt. Diese Einspritzvorrichtung kommt ohne den Druckspeicher 20 aus, weil der Förderkolben mit dem Anker des Antriebselektromagneten vereinigt ist, wodurch beide Kolbenstirnflächen gleich groß sind, so daß der Druck beiderseits des Kolbens gleich groß ist.

In Fig. 6 ist also der Anker materialeinheitlich ausgebildet mit dem Förderkolben, was im dargestellten Ausführungsbeispiel dadurch erreicht wird, daß der Förderkolben 16 zusammen mit der Kolbenstange 15 gemäß Fig. 5 weggelassen ist. In Verlängerung der Ankerbohrung 13 ist im Pumpengehäuse ein Durchbruch 21 auf der Rückseite des Ankers ausgebildet, an den die Leitung 7 angeschlossen ist. Die Funktionsweise der Vorrichtung von Fig. 6 entspricht im übrigen derjenigen von Fig. 5, d.h., die in die Leitung 7 beim Schließen des Ventils 6 eingeleitete Druckenergie wird an die Rückseite des als Förderkolben wirkenden Ankers 12 übertragen und damit für den Einspritzvorgang zusätzlich zu dem Druckstoß zur Verfügung gestellt, der in der Schwungleitung 3 durch das Schließen des Ventils 6 erzeugt worden ist.

Fig. 7 zeigt eine Abwandlung der erfindungsgemäßen Einspritzvorrichtung gemäß Fig. 6. Die Abwandlung besteht darin, daß die Kolbenpumpe 1, das Absperrventil 6 und das zweite Rückschlagventil 17 als bauliche Einheit in einem gemeinsamen Gehäuse untergebracht sind, wobei das Rückschlagventil 17 in den Anker-Förderkolben 12 integriert ist.

In dem gemeinsamen Gehäuse 22 sind Pumpe 1 und Absperrventil 6 hintereinander auf einer gemeinsamen Achse der Gehäuse-Mittellängsachse angeordnet. Das Absperrventil 6 ist ebenso wie die Pumpe 1 mit einem elektromagnetischen Antrieb ausgebildet, der eine Spule 23 umfaßt, deren Stromzuführung über die in Fig. 7 nicht dargestellte gemeinsame Steuereinrichtung für das Absperrventil und die Pumpe erfolgt. Die Erregerwicklung 23 ist wie diejenige der Pumpe ringförmig ausgebildet und in einer Paßausnehmung des Gehäuses 22 mittels eines Flansches 24 gehaltert, der mit dem Gehäuse 22 fest verbunden ist. In ähnlicher Weise ist die Wicklung 11 des Pumpenmagneten durch einen Flansch 25 in einer Paßbohrung des Gehäuses 22 gehaltert.

Der Flansch 24 erstreckt sich mit einem zentralen Abschnitt in die Spule 23 hinein, und umfaßt eine Mittelbohrung 26, die mit der durch Pfeile symbolisierten Schwungleitung 3 in Verbindung steht. Am inneren Ende ist die Bohrung 26 in ihrem Querschnitt erweitert, wobei die durch die Erweiterung gebildete Schulter ein Auflager für eine Feder 27 bildet, die als Rückstellfeder für den Anker 28 des Absperrventil-Elektromagneten dient. Dieser ist in einer Bohrung innerhalb des Gehäuses 22 aufgenommen, die einen größeren Querschnitt aufweist, als die Bohrung 26 sowie deren Erweitungsabschnitt. Der Anker 28 ist als Hohlkörper ausgebildet und weist auf einer der Bohrung 26 zugewandten Seite eine Ausnehmung auf, die in etwa denselben Querschnitt aufweist, wie die Erweiterung der Bohrung 26. An diese Ausnehmung schließt sich in dem Anker 28 eine Ausnehmung 29 geringeren Querschnitts an, wobei die Schulter zwischen der Mittelbohrung 29 und der außen liegenden Bohrung größeren Querschnitts ein weiteres Auflager für die Feder 27 bildet, die daher den Anker 28 bei nicht aktiviertem Elektromagneten in seine Ruhestellung in Fig. 7 nach rechts drückt.

Der Anker 28 bildet das Ventilorgan des Absperrventils 6. Zu diesem Zweck ist der Anker 28 an seiner Vorderseite mit einer umlaufenden Schrägfläche ausgebildet, die bei entregtem Absperrventil-Elektromagneten in Eingriff gelangt mit einer im Gehäuse 22 aus entsprechend ausgebildeten, konisch verlaufenden Ringfläche 30. Der Kanal 29 innerhalb des Ankers/Ventilorgans 28 mündet über eine Mehrzahl von Kanälen 31 in die umlaufende Schrägfläche des vorderen Ventilorganteils, die in Eingriff mit dem Ventilsitz 30 zu gelangen vermag, und in diesem Falle einen Austritt von Fluid über die Öffnungen 31 verhindert. Andernfalls, nämlich bei erregtem Absperrventil-Elektromagneten befindet sich das Ventilorgan 28 in seiner Öffnungsstellung, in welcher seine konisch verlaufende Vorderseite abgerückt ist vom Ventilsitz 30, so daß über die Öffnungen 31 Fluid in den Spaltraum zwischen den einander gegenüberliegenden Schrägflächen zu gelangen vermag, und von diesem Spaltraum in eine Bohrung 32, die in die Bohrung 13 für den Anker/Förderkolben 12 der Pumpe 1 mündet. Die Bohrung 13 ist sowohl im Gehäuse 22 wie im zentralen Abschnitt des Flansches 25 ausgebildet, und der Anker/Kolben 12 wird durch die Druckfeder 14, wie beispielsweise in Fig. 5 in seine Ruhelage vorgespannt. Diese Seite der Bohrung für den Kolben 12 steht wie beispielsweise bei der Vorrichtung von Fig. 5 in Verbindung mit dem einen Ende der Schwungleitung 3, deren anderes Ende an die Bohrung 26 im Flansch 24 angeschlossen ist.

Das Rückschlagventil 9 in der Ansaugleitung zum Vorratsbehälter 2 ist an eine Bohrung 33 des Gehäuses 22 angeschlossen, die an dem Ende in die Bohrung 13 für den Anker/Kolben 12 mündet, in welche auch die Verbindungsbohrung 32 mündet.

Der Anker/Kolben 12 ist hohl ausgelegt, weist also eine Mittelbohrung auf, und als Ventilelement ausgebildet, das die Funktion des zweiten Rückschlagventils 17 der Vorrichtung gemäß den Fig. 5 und 6 erfüllt. Die Bohrung bzw. der Hohlraum innerhalb des Ankers/Kolbens 12 weist drei Abschnitte unterschiedlichen Querschnitts auf, nämlich einen der Verbindungsbohrung 32 gegenüberliegenden Abschnitt geringen, der Bohrung 32 in etwa entsprechenden Durchmessers, einen darauf folgenden Abschnitt größeren Durchmessers, in dem ein Ventilorgan 34 sowie eine dieses Organ vorspannende Feder 35 angeordnet ist, sowie einen darauf folgenden Abschnitt wiederum größeren Durchmessers, der in die vordere Stirnseite (in Fig. 7 rechts) mündet, wobei in dem Schulterbereich zwischen diesem und dem vorausgehenden Abschnitt ein Haltering 36 für die Feder 35 eingesetzt ist. Die Feder 35 ist eine Druckfeder, die das Ventilorgan 34 gegen den Ventilsitz vorspannt, der als Schulter zwischen den beiden erstgenannten Bohrungsabschnitten des Ankers/Kolbens 12 ausgebildet ist.

Die Funktion der Einspritzvorrichtung gemäß Fig. 7 entspricht im wesentlichen derjenigen der Vorrichtung von Fig. 6, auf deren Beschreibung hiermit Bezug genommen wird.

Fig. 8 zeigt eine Integration der Funktion des Absperrventils 6 der erfindungsgemäßen Kraftstoff-Einspritzvorrichtung in den als Förderkolben ausgebildeten Anker 12 des Antriebssolenoids für die Kraftstoffbeschleunigungspumpe 1, wobei die dargestellte Anordnung funktionsmäßig in etwa der Vorrichtung von Fig. 6 entspricht, und wobei in Fig. 8 das zweite Rückschlagventil 17 nicht dargestellt ist. Die Integration in den Förderkolben erübrigt eine Steuerung der Absperrventilfunktion durch die Steuereinheit 8, wie beispielsweise bei der Vorrichtung von Fig. 6. Durch die funktionelle Integration der Absperrventilfunktion in die Funktion der Pumpe 1 wird eine Vereinfachung der Einspritzvorrichtung erreicht, die zu einer erheblichen Material- und Platzersparnis führt.

Der Anker/Kolben 12 ist als zylindrischer Vollkörper ausgebildet und mit dem rückseitigen Ende in einer Bohrung 40 im in Fig. 8 linken Teil des Pumpengehäuses gelagert, während eine weitere Bohrung 40a mit dem selben Durchmesser im rechten Teil des Pumpengehäuses ausgebildet ist und beim Förderhub des Kolbens 12 dessen vorderen Abschnitt führt. An der vorderen Stirnseite des Ankers/Kolbens 12 ist eine zentrale Ausnehmung 41 vorgesehen, deren 8asisfläche eines der beiden Lager für die Feder 14 zur Rückstellung des Ankers 12 bildet. Die andere Lagerstelle für die Feder 14 stellt eine Schulter zwischen einer förderseitigen Bohrung 43 und einer nachfolgenden engeren Bohrung 44 dar, an welche das pumpenseitige Ende der Schwungleitung angeschlossen ist. Bei der Feder 14 handelt es sich wie bei den vorausgehenden Ausführungsformen der erfindungsgemäßen Vorrichtung um eine Druckfeder, die den Anker/Kolben 12 in seinet Ruhestellung vorspannt, in welcher er mit seiner hinten gelegenen Stirnfläche an einer Ringfläche anliegt, die gebildet ist im Übergangsbereich von der Bohrung 40 zu einer zurückliegenden Bohrung 45 geringeren Durchmessers, die in Übertragungsverbindung mit der Schwungleitung 3 steht.

Die Schulter bzw. die Ringfläche 46 im Übergangsbereich von der durchmessergrößeren Bohrung 40 zur durchmesserkleineren Bohrung 43 dient als Anschlagfläche für die ringförmige vordere Stirnwand des Ankers/Kolbens 12 und wirkt mit diesem im Sinne der Funktion des Absperrventils 6 der vorstehend beschriebenen Ausführungsformen der Erfindung zusammen. D.h., daß der Anker/Kolben 12 nach Zurücklegen einer Hubstrecke x, die festgelegt ist durch den Abstand der vorderen Stirnfläche des in Ruhestellung befindlichen Ankers/Kolbens 12 von der Ringfläche 46, an dieser anstößt, wodurch die Beschleunigung des Kraftstoffes durch den Anker/Kolben 12 schlagartig unterbrochen und die dem Fluid innewohnende kinetische Energie schlagartig in einen Druckstoß umgewandelt wird, dessen Höhe dazu ausreicht, Kraftstoff über die Einspritzdüse 5 abzuspritzen, die im Bereich der Bohrung 45 an die Schwungleitung 3 angeschlossen ist, an deren anderem Ende im Bereich der Bohrung 44 die Kraftstoffansaugleitung mit dem Rückschlagventil 9 angeschlossen ist.

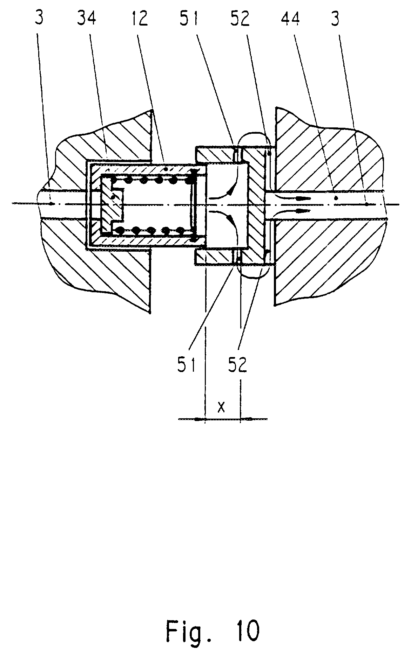

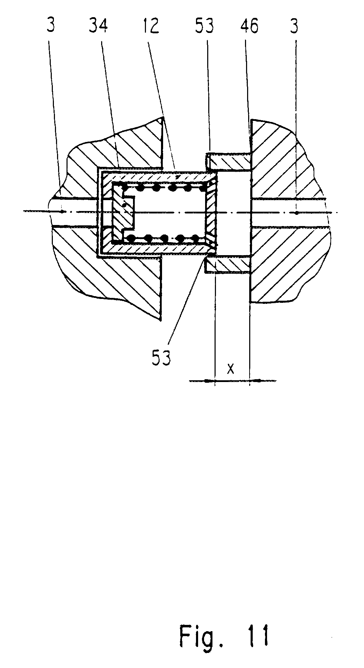

Weitere Varianten eines integrierten Förderkolben/Anker/Absperrventils sind in den Fig. 9 bis 11 dargestellt. Auch bei diesen Varianten erfolgt eine Druckstoßerzeugung nach Zurücklegen einer Hubstrecke des Ankers/Förderkolbens 12 in der Größenordnung von x. Während die Absperrventilfunktion gemäß Fig. 9, an ein auf der Kolbenhubstrecke liegendes Hindernis ähnlich wie gemäß Fig. 8, durch ein Anstoßen des Ankers/Kolbes erzielt wird, erfolgt die Realisierung dieser Funktion gemäß den Fig. 10 und 11 durch eine schlagartige Unterbrechung der Kraftstoffbeschleunigung durch das plötzliche Verschließen von Strömungsschikanen in Gestalt enger Bohrungen.

Ähnlich wie in Fig. 8 erfolgt die Führung des Ankers/Kolbens 12 bei den Ausführungsformen gemäß den Fig. 9 bis 11 in zwei in axialer Richtung voneinander beabstandeten Bohrungen 40 und 41, wobei im übrigen den Fig. 9 bis 11 die Anordnung von Fig. 8 zugrunde liegt, mit dem Unterschied, daß das zweite Rückschlagventil 17 ähnlich wie bei der Ausführungsform der erfindungsgemäßen Vorrichtung gemäß Fig. 7 in den als Hohlelement ausgebildeten Anker/Kolben 12 integriert ist, wie durch gleiche Bezugszeichen für gleiche Bauteile der Vorrichtungen von Fig. 7 bzw. 9 bis 11 verdeutlicht ist.

In Fig. 9 ist ein Ausführungsbeispiel dargestellt, bei dem nach Zurücklegen einer Hubstrecke x die innengelegene Stirnfläche des Ventilorgans 34 des Rückschlagventils 17 an einem Zapfen 50 an schlägt, der auf der Längsmittelachse der Anker/Kolbenbohrungen 40 und 41 angeordnet ist. Dieser Aufprall bewirkt den anhand der Fig. 8 geschilderten Druckstoß.

In dem in Fig. 10 dargestellten Ausführungsbeispiel erfolgt die Beschleunigung des Kraftstoffes über Schikanen in Gestalt von engen Bohrung 51 und 52, die im Bereich des in Förderrichtung vorne gelegenen Endes der Bohrung 41 ausgebildet sind und in Übertragungsverbindung stehen mit der an die Schwungleitung angeschlossenen Gehäusebohrung 44. Wie in Fig. 10 durch Pfeile verdeutlicht, strömt im Inneren des Ankers/Kolbens 12 enthaltener Kraftstoff über die quer zur Kraftstoff-Förderrichtung verlaufende Bohrungen 51 in in Förderrichtung davon beabstandete Bohrung 52 im Pumpengehäuse und von dort in die Bohrung 44 und schließlich in die Schwungleitung. Sobald das ringförmige Vorderende des Ankers/Kolbens 12 eine Hubstrecke x zurückgelegt hat, verschließt dieser Teil des Kolbens die Radialöffnungen 51, wodurch schlagartig die Beschleunigung des Kraftstoffes beendet und dadurch ein Druckstoß erzeugt wird.

Das Ausführungsbeispiel gemäß Fig. 11 unterscheidet sich von der Variante gemäß Fig. 10 dadurch, daß die Strömungsschikanen in Gestalt von Öffnungen 53 in einer vorderen Stirnwand des hohlen Ankers/Kolbens ausgebildet sind. Nach Zurücklegen der Hubstrecke x gelangt die vordere Kolbenstirnwand mit den radial außen gelegenen Öffnungen 53 in Anlage an die Schulter 46, wodurch ein Strömungsaustritt von Fluid aus dem Kolbeninnern in die Bohrung 44 schlagartig unterbrochen wird, so daß die kinetische Energie des strömenden Kraftstoffes in einen Druckstoß umgewandelt wird, der zum Ausstoßen von Kraftstoff über die Einspritzdüse führt.

## Patentansprüche

1. Vorrichtung zum Einspritzen von Kraftstoff für Brennkraftmaschinen mit einer Einspritzdüse (5), der Kraftstoff durch eine / Druckstoßeinrichtung zugeführt wird, die eine kraftstoffbeschleunigende intermittierend betriebene Kolbenpumpe (1) und ein den Kraftstofffluß verzögerndes Absperrventil (6) umfaßt, durch dessen Betätigung die kinetische Energie des beschleunigten Kraftstoffes schlagartig in eine den Kraftstoff über die Einspritzdüse (5) abspritzende Stoßwelle umgewandelt wird, dadurch gekennzeichnet, daß die Kolbenpumpe (1) elektromagnetisch angetrieben ist, wobei eine elektronische Steuereinrichtung (8) für die Pumpe (1) und ein während des Beschleunigungshubs geschlossener das Absperrventil (6) aufweisender Kraftstoffkreislauf vorgesehen sind, der den Saugraum hinter dem Förderkolben (16) der Pumpe (1) mit dem Schwungleitungsraum vor dem Förderkolben (16) der Pumpe (1) verbindet.

2. Vorrichtung nach Anspruch 1, wobei das Absperrventil (6) an einen Abzweig einer die Pumpe (1) mit der Einspritzdüse (5) verbindenden Schwungleitung (3) angeschlossen ist, im geöffneten Zustand ein Abfließen des beschleunigten Kraftstoffes aus der Schwungleitung (3) in den Abzweig zuläßt und bei schlagartigem Schließen die Druckstoßwelle erzeugt, durch welche der Kraftstoff über die Einspritzdüse (5) abgespritzt wird, und wobei der Verdrängungsraum vor dem Förderkolben (16) der Kolbempumpe (1) an die Schwungleitung (3) sowie über ein Rückschlagventil (10) an einem Kraftstoffvorratsbehälter angeschlossen ist, so daß aus diesem beim Rückstellen des Kolbens (16) Kraftstoff in den Verdrängungsraum und damit in die Schwungleitung (3) fließt.

3. Vorrichtung nach Anspruch 1 und/oder 2, **dadurch gekennzeichnet,** daß der Saugraum hinter dem Förderkolben (16) über ein Rückschlagventil (17) mit dem Verdrängungsraum vor dem Kolben (16) verbunden ist, damit beim Rückstellen des Kolbens (16) Kraftstoff aus dem Saug- in den Verdrängungsraum zu strömen vermag.

4. Vorrichtung nach Anspruch 3, **dadurch gekennzeichnet,** daß die Kolbenpumpe (2) einen Solenoidantrieb umfaßt, dessen Anker (12) über eine Kolbenstange (14) mit dem Förderkolben (16) verbunden ist.

5. Vorrichtung nach Anspruch 4, **dadurch gekennzeichnet,** daß die Förderkolbenrückseite zusätzlich mit einem Druckspeicher (20) zur Kompensation des Differenzdruckes, der aus der Flächendifferenz zwischen der vollflächigen Kolbenvorderseite und der durch den Anschluß der Kolbenstange (14) an den Kolben (16) bedingten Ringfläche der Kolbenrückseite resultiert, in Verbindung steht.

6. Vorrichtung nach Anspruch 1 und/oder 2, **dadurch gekennzeichnet,** daß der Antrieb der Kolbenpumpe (1) einen Solenoid aufweist, dessen Anker (12) als Förderkolben mit zwei gleich großen Stirnseiten ausgebildet ist.

7. Vorrichtung nach einem oder mehreren der Ansprüche 1 bis 6, **dadurch gekennzeichnet,** daß die Kolbenpumpe (1) und das Absperrventil (6) als bauliche Einheit ausgeführt sind.

8. Vorrichtung nach Anspruch 7, **dadurch gekennzeichnet,** daß die Kolbenpumpe (1) und das Absperrventil (6) in einem gemeinsamen Gehäuse (22) angeordnet sind und jeweils aus unmittelbar zueinander benachbarten Solenoiden bestehen, deren Anker (12 und 28) als Förderkolben bzw. als kolbenförmiges Ventilorgan ausgebildet sind.

9. Vorrichtung nach Anspruch 8, **gekennzeichnet durch** eine koaxiale Anordnung von Förderkolben (12) und kolbenförmigem Ventilorgan (28).

10. Vorrichtung nach Anspruch 9, **dadurch gekennzeichnet,** daß der Ausgang des Absperrventils (6) über einen kurzen Kanal (32) mit dem rückwärtigen Saugraum der Pumpe (1) verbunden ist, in den ein weiterer Kanal (33) mündet, der an das Rückschlagventil anschließbar ist, das in Verbindung mit dem Kraftstoffvorratsbehälter (2) steht.

11. Vorrichtung nach einem der Ansprüche 8 bis 10, **dadurch gekennzeichnet,** daß das Ventilorgan des Absperrventils (6) ein federrückgestellter hohler Kolben (Kolben mit Sacklochbohrung) (28) mit frontseitigen Fluidaustrittsöffnungen (31) ist, die in Schrägflächen des Kolbens (28) münden, die mit entsprechenden Schrägflächen (30) (Ventilsitz) am vorderen Ende einer den Kolben (28) aufnehmenden Bohrung in Dichteingriff zu gelangen vermögen.

12. Vorrichtung nach Anspruch 11, **dadurch gekennzeichnet,** daß die Schrägflächen am Vorderende des Kolbens (28) sowie am gegenüberliegenden Ende der Kolbenbohrung konisch umlaufende Flächen sind.

13. Vorrichtung nach einem der Ansprüche 8 bis 12, **dadurch gekennzeichnet,** daß das den hinter dem Förderkolben (12) gelegenen Saugraum mit dem vor dem Förderkolben (12) gelegenen Verdrängungsraum verbindende Rückschlagventil (34, 35) in den Förderkolben (12) integriert ist.

14. Vorrichtung nach Anspruch 13, **dadurch gekennzeichnet,** daß das Rückschlagventil (34, 25) ein Ventilorgan (34) umfaßt, das in einer Durchgangs- oder Mittelbohrung des Förderkolbens (12) angeordnet und mittels einer Feder (35) gegen einen Ventilsitz am in Förderrichtung hinteren Ende des Förderkolbenhohlraums gedrängt ist.

15. Vorrichtung nach einem oder mehreren der Ansprüche 1 bis 14,
dadurch gekennzeichnet,
daß die Kolbenpumpe (1) elektromagnetisch angetrieben ist und das Absperrventil (6) in den als Förderkolben (12) der Kolbenpumpe (1) ausgebildeten Anker integriert ist.

16. Vorrichtung nach Anspruch 15, **dadurch gekennzeichnet,** daß der Förderhub des Förderkolbens (12) durch ein Anschlagmittel (46) begrenzt ist, wobei das Auftreffen des Förderkolbens (12) auf dem Anschlagmittel (46) die Durckstoßwelle im Kraftstoff auslöst und den Kraftstofffluß beendet.

17. Vorrichtung nach Anspruch 16, **dadurch gekennzeichnet,** daß das Anschlagmittel (46) eine Verengung der den Förderkolben (12) im Pumpengehäuse aufnehmenden Bohrung (40) ist.

18. Vorrichtung nach Anspruch 17, **dadurch gekennzeichnet,** daß die Verengung eine Ringfläche (46) zwischen der Förderkolbenbohrung (40) und einer in Förderrichtung nachgeschalteten Bohrung (43) geringeren Querschnitts ist, gegen die der Förderkolben (12) mit seiner in Förderrichtung vorderen Stirnfläche auszustoßen vermag.

19. Vorrichtung nach Anspruch 18, **dadurch gekennzeichnet,** daß der Förderkolben (12) eine zentrale Durchgangsbohrung aufweist, in der das Rückschlagventil in Gestalt eines Ventilorgans (34) angeordnet ist, das unter Federvorspannung gegen einen Ventilsitz am in Förderrichtung hinteren Ende der Durchgangsbohrung gedrängt ist und nach Zurücklegen einer vorgesehenen Beschleunigungsstrecke des Kolbens (12), diesen schlagartig abbremsend, auf einen Anschlag (50) auftrifft.

20. Vorrichtung nach Anspruch 19, **dadurch gekennzeichnet,** daß der Anschlag ein Zapfen (50) ist, der sich entlang der Längsmittenachse der Förderkolbenbohrung erstreckt.

21. Vorrichtung nach Anspruch 15, **dadurch gekennzeichnet,** daß im Förderweg des Förderkolbens (12) Strömungsschickanen in Gestalt von Engführungen (51, 53) des durchströmten Förderquerschnitts vorgesehen sind, die nach einer vorbestimmten Hubstrecke des Kolbens (12) unter Beenden des Kraftstoffflusses und Auslösen der Kraftstoff über die Einspritzdüse abspritzenden Stoßwelle verschlossen werden.

22. Vorrichtung nach Anspruch 22, **dadurch gekennzeichnet,** daß die Engführungen enge Bohrungen (51, 52) zwischen einer den Förderkolben (12) aufnehmenden Bohrung und der Schwungleitung (3) vor dem Förderkolben (12) sind, die radial zum Kolben (12) verlaufen und durch dessen Mantelflächen verschließbar sind.

23. Vorrichtung nach Anspruch 21, **dadurch gekennzeichnet,** daß die Engführungen in Gestalt von Öffnungen in einer in Förderrichtung vorderen Stirnwand des nach hinten von einem Rückschlagventil (34) verschlossenen, hohlen Förderkolbens (12) ausgebildet sind, die bei Eintritt des Kolbenvorderendes in einen Ringraum der Kolbenbohrung verschlossen werden, dessen Innendurchmesser demjenigen des Kolbenankerdurchmessers im wesentlichen entspricht.

24. Vorrichtung nach einem der Ansprüche 15 bis 23, **dadurch gekennzeichnet,** daß Einlaß und Auslaß der Förderpumpe (1) durch die Schwungleitung (3) miteinander verbunden sind, wobei die Einspritzdüse (5) im Bereich des Pumpeneinlasses von der Schwungleitung (3) abzweigt, während ein Kraftstoffvorratsbehälter (2) im Bereich des Pumpenauslasses über ein Rückschlagventil an die Schwungleitung (3) zum Nachfüllen der über die Einspritzdüse (5) abgespritzten Kraftstoffmenge in die Schwungleitung (3) während des Saughubs der Pumpe angeschlossen ist.

25. Vorrichtung nach einem oder mehreren der Ansprüche 1 bis 14, **dadurch gekennzeichnet,** daß das Absperrventil ein Solenoid ist, dessen Anker (72) als Ventilorgan ausgebildet in einer Gehäusebohrung (73) angeordnet und mit einer Durchgangsbohrung (76) versehen ist, die auf Dauer mit einem Absperrventileinlaß und mit einem radial in die Gehäusebohrung (73) mündenden Absperrventilauslaß (80) dann verbunden ist, wenn sich der Anker (72) bei Betätigen des Solenoids am einen Ende der Gehäusebohrung (73) befindet, und daß im Anker (72) axial voneinander beabstandete radiale Schlitze bzw. Bohrungen (78) ausgebildet sind, die die Ankerdurchgangsbohrung (76) mit der Ankeraußenumfangsfläche verbinden, die bei betätigtem Solenoid durch die Wandung der Gehäusebohrung (73) vom Absperrventilauslaß (80) isoliert sind, und die sukzessive mit diesem in Kraftstoffübertragungsverbindung gelangen, wenn der Anker (72) bei Entregung des Solenoids unter Einwirkung einer Feder (74) an das andere Ende der Gehäusebohrung (73) verstellt wird.

## Claims

1. Device for the injection of fuel for internal combustion engines with an injection nozzle (5) to which fuel is supplied by a pressure impulse device comprising an intermittently actuated fuel-accelerating piston pump (1) and a shut-off valve (6) which retards the fuel flow, through the actuation of which the kinetic energy of the accelerated fuel is converted in bursts into a pressure wave which sprays the fuel out via the injection nozzle (5), **characterised by the fact** that the piston pump (1) is electro-magnetically operated, with an electronic control device (8) for the pump (1) and a fuel circulation providing the shut-off valve (6), closed during the acceleration stroke, which connects the suction chamber behind the feed piston (16) of the pump (1) to the high-pressure pipe chamber in front of the feed piston (16) of the pump (1).

2. Device according to Claim 1, in which the shut-off valve (6) is connected to a branch of a high-pressure pipe (3) linking the pump (1) with the injection nozzle (5) and in the open state permits an outflow of the accelerated fuel from the high-pressure pipe (3) into the branch pipe and with sudden closure produces the pressure wave through which the fuel is sprayed out via the injection nozzle (5), and in which the displacement chamber in front of the feed piston (16) of the piston pump (1) is connected to the high-pressure pipe (3) via a non-return valve (10) on a fuel tank, so that with the return of the piston (16) fuel flows into the displacement chamber and thereby into the high-pressure pipe (3).

3. Device according to Claim 1 and/or 2, **characterised by the fact** that the suction chamber behind the feed piston (16) is linked via a non-return valve (17) with the displacement chamber in front of the piston (16), so that on the return of the piston (16) fuel is able to flow from the suction chamber into the displacement chamber.

4. Device according to Claim 3, **characterised by the fact** that the piston pump (2) includes a solenoid drive whose armature (12) is connected via a piston rod (14) with the feed piston (16).

5. Device according to Claim 4, **characterised by the fact** that the rear of the feed piston is connected with pressure reservoir (20) for compensation of the differential pressure which results from the difference in area between the full surface front of the piston and the annular surface of the rear of the piston caused by the connection of the piston rod (14) to the piston (16).

6. Device according to Claim 1 and/or 2, **characterised by the fact** that the drive of the piston pump (1) provides a solenoid whose armature (12) is shaped as a feed piston with two front sides of the same size.

7. Device according to one or more of Claims 1 to 6, **characterised by the fact** that the piston pump (1) and the shut-off valve (6) are made as a constructional unit.

8. Device according to Claim 7, **characterised by the fact** that the piston pump (1) and the shut-off valve (6) are fitted in a joint housing (22) and consist in each case of solenoids directly adjacent to each other, whose armatures (12 and 28) are shaped as feed pistons or as piston-shaped valve elements.

9. Device according to Claim 8, **characterised by** a co-axial arrangement of feed piston (12) and piston-shaped valve element (28).

10. Device according to Claim 9, **characterised by the fact** that the outlet of the shut-off valve (6) is connected via a short pipe (32) with the rear suction chamber of the pump (1), into which a further pipe (33) comes out, which can be connected to the non-return valve which is connected to the fuel tank (2).

11. Device according to one of the Claims 8 to 10. **characterised by the fact** that the valve element of the shut-off valve (6) is a spring-return hollow piston (piston with a blind bore) (28) with frontal fluid outlet openings (31) which come out in sloping surfaces of the piston (28) which are able to get into seal-tight engagement with corresponding sloping surfaces (30) (valve seating) on the front end of a bore occupying the piston (28).

12. Device according to Claim 11, **characterised by the fact** that the sloping surfaces at the front end of the piston (28) and on the end of the piston bore facing it are conically surrounding surfaces.

13. Device according to one of the Claims 8 to 12, **characterised by the fact** that the non-return valve (34, 35) connecting the suction chamber situated behind the feed piston (12) with the displacement chamber situated in front of the feed piston (12) is integrated in the feed piston (12).

14. Device according to Claim 13, **characterised by the fact** that the non-return valve (34, 35) includes a valve element (34) which is fitted in a straight-through or central bore of the feed piston (12) and is urged, by means of a spring (35), against a valve seating on the rear end of the feed piston cavity in the direction of the feed.

15. Device according to one or more of the Claims 1 to 14, **characterised by the fact** that the piston pump (1) is electro-magnetically actuated and the shut-off valve (6) is integrated with the armature shaped as a feed piston (12) of the piston pump (1).

16. Device according to Claim 15, **characterised by the fact** that the feed stroke of the feed piston (12) is limited by a stop (46), with the impact of the feed piston (12) on the stop (46) setting off the pressure wave in the fuel and ending the fuel flow.

17. Device according to Claim 16, **characterised by the fact** that the stop (46) is a narrowing of the bore (40) receiving the feed piston (12) in the pump housing.

18. Device according to Claim 17, **characterised by the fact** that the narrowing is an annular surface (46) between the feed piston bore (40) and a bore (43) of smaller cross section set after it in the direction of feed, against which the feed piston (12) is able to strike with its front face in the direction of feed.

19. Device according to Claim 18, **characterised by the fact** that the feed piston (12) exhibits a central straight-through bore, in which the non-return valve in the shape of a valve element is fitted, which is pressed under spring pre-tension against a valve seating at the rear end of the straight-through bore in the direction of feed and after covering a pre-set acceleration course of the piston (12), suddenly braking the latter, strikes a stop (50).

20. Device according to Claim 19, **characterised by the fact** that the stop is a pin (50) which extends along the longitudinal central axis of the feed piston bore.

21. Device according to Claim 15, **characterised by the fact** that in the feed path of the feed piston (11) flow chicanes are provided in the form of restrictions (51,52) of the feed cross section flowed through, which are closed after a predetermined length of the stroke of the piston (12) with ending of the fuel flow and setting off the pressure wave which sprays out fuel via the injection nozzle.

22. Device according to Claim 21, **characterised by the fact** that the restrictions are narrow bores (51,52) between a bore providing the feed piston (12) and the high pressure pipe (3) in front of the feed piston (12), which run radially to the piston (12) and can be closed through the shell of the latter.

23. Device according to Claim 21, **characterised by the fact** that the restrictions are formed in the shape of the openings in a front face of the hollow feed piston (12) in the direction of feed which are closed to the rear by a non-return valve (34), which are closed on the entry of the front end of the piston into an annular space of the piston bore, whose internal diameter corresponds substantially to that of the piston armature diameter.

24. Device according to one of the Claims 15 to 23, **characterised by the fact** that inlet and outlet of the feed pump (1) are connected with each other by the high-pressure pipe (3), with the injection nozzle branching off from the high-pressure pipe in the region of the pump inlet, while a fuel tank (2) is connected in the region of the pump inlet via a non-return valve to the high-pressure pipe (3) for refilling the amount of fuel sprayed into the high-pressure pipe (3) via the injection nozzle (5) during the suction stroke of the pump.

25. Device according to one or more of the Claims 1 to 14, **characterised by the fact** that the shut-off valve is a solenoid whose armature (72), formed as a valve element, is fitted in a bore (73) in the housing and is provided with a straight-through bore (74) which is permanently connected with a shut-off valve inlet and with a shut-off valve outlet (80) extending radially into the bore (73) in the housing when the armature (72), on actuation of the solenoid, is at one end of the bore (73) in the housing, and that radial slots or bores (78) are formed which are axially separated from each other, which connect the straight-through bore (76) in the armature with the outer peripheral surface of the armature, which are isolated from the shut-off valve outlet (80) by the wall of the bore (73) in the housing when the solenoid is actuated, and which successively get into fuel transfer connection with this when the armature (72), on de-energising of the solenoid. is displaced under the action of a spring (74) to the other end of the bore (73) in the housing.

## Revendications

1. Dispositif d'injection de carburant pour moteurs à combustion interne, comportant une buse d'injection (5) qui reçoit le carburant au moyen d'un dispositif de pression impulsionnelle qui comprend une pompe à piston (1) pour accélérer le carburant, qui fonctionne par intermittence, et une soupape d'arrêt (6) qui retarde le flux du carburant et qui par son action transforme brusquement l'énergie cinétique du carburant accéléré en une onde de choc émettant un jet de carburant par la buse d'injection (5),
caractérisé en ce que la pompe à piston (1) est actionnée de manière électromagnétique, et en ce qu'il est prévu un dispositif de commande électronique (8) de la pompe (1) et un circuit de carburant, fermé pendant la course d'accélération et comportant la soupape d'arrêt (6) le circuit de carburant reliant l'espace d'aspiration derrière le piston d'alimentation (16) de la pompe (1) à l'espace de la conduite d'accélération devant le piston d'alimentation (16) de la pompe (1).

2. Dispositif selon la revendication 1, dans lequel la soupape d'arrêt (6) est connectée à une branche de la conduite d'accélération (3) reliant la pompe (1) à la buse d'injection (5), permettant, dans son état ouvert, un écoulement du carburant accéléré de la conduite d'accélération (3) vers la branche et engendrant, lors d'une fermeture brusque, l'onde de choc sous pression qui provoque l'éjection du carburant par la buse d'injection (5), l'espace de refoulement devant piston d'alimentation (16) de la pompe à piston (1) étant relié à la conduite d'accélération (3) et, par un clapet anti-retour (10), à un réservoir de carburant, de manière à ce que du carburant entre dans l'espace de refoulement, et ainsi dans la conduite d'accélération (3), lorsque le piston (16) est rappelé.

3. Dispositif selon la revendication 1 et/ou 2,
caractérisé en ce que l'espace d'aspiration derrière le piston d'alimentation (16) est relié par un clapet anti-retour (17) à l'espace de refoulement devant piston (16) pour permettre un écoulement de carburant de l'espace d'aspiration vers l'espace de refoulement lorsque le piston (16) est rappelé.

4. Dispositif selon la revendication 3,
caractérisé en ce que la pompe à piston (1) comprend un entraînement magnétique dont l'armature (12) est reliée au piston d'alimentation (16) par une tige de piston (14).

5. Dispositif selon la revendication 4,
caractérisé en ce que la face arrière du piston d'alimentation est en outre reliée à un accumulateur de pression (20) pour compenser la différence de pression résultant de la différence de surface entre la face avant complète du piston et la face arrière du piston rendue annulaire par la connexion de la tige (14) du piston (16).

6. Dispositif selon la revendication 1 et/ou 2,
caractérisé en ce que l'entraînement de la pompe à piston (1) comprend un aimant dont l'armature (12) est en forme de piston d'alimentation avec deux faces frontales de dimensions identiques.

7. Dispositif selon l'une ou plusieurs des revendications 1 à 6,
caractérisé en ce que la pompe à piston (1) et la soupape d'arrêt (6) sont réalisées en une seule unité de construction.

8. Dispositif selon la revendication 7,
caractérisé en ce que la pompe à piston (1) et la soupape d'arrêt (6) sont disposées dans un boîtier commun (22) et consistent en des aimants immédiatement voisins dont les armatures (12 et 28) ont la forme de pistons ou de soupapes en forme de pistons.

9. Dispositif selon la revendication 8,
caractérisé par une disposition coaxiale du piston d'alimentation (12) et de l'organe de soupape en forme de piston (28).

10. Dispositif selon la revendication 9,
caractérisé en ce que la sortie de la soupape d'arrêt (6) est reliée par un canal de faible longueur (32) à l'espace d'aspiration situé en arrière de la pompe (1) dans lequel débouche un autre canal (33) qui peut être relié au clapet anti-retour relié au réservoir de carburant (2).

11. Dispositif selon l'une des revendications 8 à 10,
caractérisé en ce que l'organe de la soupape d'arrêt (6) est un piston creux (piston à alésage borgne) (28) rappelé par un ressort et présentant sur sa face avant des ouvertures de sortie du fluide (31) qui débouchent dans des faces obliques du piston (28) qui peuvent coopérer de manière étanche avec des surfaces obliques correspondantes (30) (siège de soupape) situées à l'extrémité antérieure d'un alésage recevant le piston (28).

12. Dispositif selon la revendication 11,
caractérisé en ce que les surfaces obliques sur l'extrémité avant du piston (28), ainsi que sur l'extrémité en regard de l'alésage du piston sont des surfaces tournantes coniques.

13. Dispositif selon l'une des revendications 8 à 12,
caractérisé en ce que le clapet anti-retour (34, 35) reliant l'espace d'aspiration situé en aval du piston d'alimentation (12) à l'espace de refoulement situé en amont du piston d'alimentation (12) est intégrée dans le piston d'alimentation (12).

14. Dispositif selon la revendication 13,
caractérisé en ce que le clapet anti-retour (34, 25) comprend un organe (34) qui est disposé dans un alésage passant ou alésage central du piston d'alimentation (12) et est poussé par un ressort (35) contre un siège de soupape situé à l'extrémité, postérieure dans le sens de circulation, de l'espace creux du piston d'alimentation.

15. Dispositif selon l'une ou plusieurs des revendications 1 à 14,
caractérisé en ce que la pompe à piston (1) est actionnée de manière électromagnétique, et que la soupape d'arrêt (6) est intégrée dans l'armature qui est réalisée sous la forme d'un piston d'alimentation (12) de la pompe à piston (1).

16. Dispositif selon la revendication 15,
caractérisé en ce que la course d'alimentation du piston (12) est délimitée par des moyens de butée (46), l'arrivée du piston d'alimentation (12) sur le moyen de butée (46) déclenchant l'onde de choc sous pression dans le carburant et mettant un terme à la circulation du carburant.

17. Dispositif selon la revendication 16,
caractérisé en ce que le moyen de butée (46) est un rétrécissement de l'alésage (40) recevant le piston d'alimentation (12) dans le boîtier de la pompe.

18. Dispositif selon la revendication 17,
caractérisé en ce que le rétrécissement est une surface annulaire (46) entre l'alésage (40) du piston d'alimentation et un alésage (43) de section transversale inférieure disposé en arrière dans la direction de circulation, la face, antérieure dans la direction de circulation, du piston (12) pouvant buter contre cette face annulaire.

19. Dispositif selon la revendication 18,
caractérisé en ce que le piston d'alimentation (12) présente un alésage passant central dans lequel est disposé le clapet anti-retour ayant la forme d'un organe de soupape (34), cet organe étant poussé contre un siège de soupape situé à l'extrémité, postérieure dans la direction de circulation, de l'alésage passant et rencontrant une butée (50) après avoir parcouru un trajet d'accélération prédéterminé du piston (12), en le freinant brusquement.

20. Dispositif selon la revendication 19,
caractérisé en ce que la butée est un ergot (50) qui s'étend le long de l'axe longitudinal central de l'alésage du piston d'alimentation.

21. Dispositif selon la revendication 15,
caractérisé en ce que, dans le trajet du piston d'alimentation (12), sont prévues des chicanes de circulation sous forme d'étranglements (51, 53) de la section du parcours qui sont fermées après une course prédéterminée du piston (12) en arrêtant ainsi le flux de carburant et en déclenchant l'onde de choc engendrant un jet de carburant par la buse d'injection.

22. Dispositif selon la revendication 21,
caractérisé en ce que les étranglements sont des alésages étroits (51, 52) entre un alésage qui reçoit le piston d'alimentation (12) et la conduite d'accélération (3) située en amont du piston (12), ces alésages étroits s'étendant radialement par rapport au piston (12) et pouvant être fermés par les surfaces d'enveloppe de ce dernier.

23. Dispositif selon la revendication 21,
caractérisé en ce que les étranglements ont la forme d'ouvertures pratiquées dans une paroi, antérieure dans la direction de circulation, du piston d'alimentation creux fermé à l'arrière par un clapet anti-retour (34), ces ouvertures étant fermées lorsque l'extrémité antérieure du piston entre dans un espace annulaire de l'alésage de piston dont le diamètre intérieur correspond sensiblement à celui de l'armature du piston.

24. Dispositif selon l'une des revendications 15 à 23,
caractérisé en ce que l'entrée et la sortie de la pompe de circulation (1) sont reliées entre elles par la conduite d'accélération (3), la buse d'injection (5) étant embranchée à la conduite d'accélération (3) dans la région de l'entrée de la pompe, tandis qu'un réservoir de carburant (2) est relié dans la région de la sortie de la pompe, au cours de la course d'aspiration de celle-ci, à la conduite d'accélération (3) au moyen d'un clapet anti-retour en vue de compenser le manque de carburant dans la conduite d'accélération (3) éjecté par la buse d'injection (5).

25. Dispositif selon l'une ou plusieurs des revendications 1 à 14,
caractérisé en ce que la soupape d'arrêt est un solénoïde dont l'armature (72) présente la forme d'un organe de soupape, est disposée dans un alésage du boîtier (73) et est munie d'un alésage traversant (76) qui est relié en permanence à une entrée de la soupape d'arrêt et à une sortie (80) de la soupape d'arrêt débouchant radialement dans l'alésage de boîtier (73), lorsque l'armature (72) se trouve à une extrémité de l'alésage de boîtier (73) lors de l'actionnement du solénoïde, et que, dans l'armature (72), sont prévues des fentes ou alésages radiaux (78) agencés avec un certain intervalle axial, qui relient l'alésage traversant de l'armature (76) à la surface périphérique de l'armature, qui, lorsqu'on actionne le solénoïde, sont isolées de la sortie de la soupape d'arrêt (80) par la paroi de l'alésage de boîtier (73) et qui entrent successivement en relation de transfert de carburant avec ladite sortie lorsque, sous l'action d'un ressort (74), l'armature (72) est déplacée vers l'autre extrémité de l'alésage de boîtier (73) quand le solénoïde est désexcité.
